# EUROPEAN PATENT APPLICATION

(11) **EP 1 142 927 A1**
(43) Date of publication of application: **10.10.2001**
(21) Application number: 00302961.8
(22) Date of filing: 07.04.2000
(51) Int. Cl.: C08G 77/04, C07F 7/08, C07F 7/21

(54) **High refractive index optical silicone oil and method for the preparation thereof**

(71) Applicant: Dow Corning Toray Silicone Co., Ltd., Tokyo (JP)
(72) Inventor: Kobayashi, Hideki of Dow Corning Toray Silicone, Ichibara-shi, Chiba Prefecture (JP); Tateishi, Mari of Dow Corning Toray Silicone, Ichihara-shi, Chiba Prefecture, (JP)
(74) Representative: Hall, Marina

(57) **Abstract**

A high-refractive-index optical silicone oil comprising a cyclooligosiloxane having the following formula: 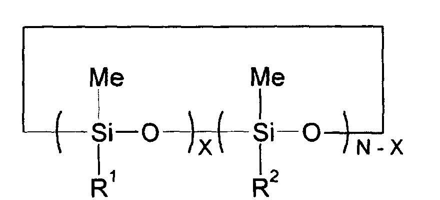 wherein Me is methyl; R¹ is C₁ to C₂₀ alkyl, alkenyl, or aryl; R² is phenethyl or 2-methylphenethyl; **X** is an integer from 0 to 3; and **N** is an integer from 4 to 10; and the silicone oil has a refractive index of from 1.45 to 1.50 at 25 °C. A method of preparing a high-refractive-index optical silicone oil.

## Description

This invention relates to a high-refractive-index optical silicone oil and to a method for the preparation thereof. More particularly, this invention relates to a high-refractive-index optical silicone oil comprising a phenethyl-substituted or 2-methylphenethyl-substituted cyclooligosiloxane and to a method for the preparation thereof.

Optical silicone oils, like optical adhesives and optical greases, are used as fillers between lenses and between prisms within optical devices and as fillers in the connectors used for optical fibers. However, when an optical silicone oil is employed as the fill between lenses or prisms or between the terminal surfaces of optical fibers, any residual bubbles present in the silicone oil and/or bubbles produced along the interface between the silicone oil and lens, prism, or optical fiber terminal function to scatter the transmitted light or optical signal and thereby cause flare or transmission losses. To counter this problem, low-viscosity phenyl-type silicone oils with viscosities (25°C) in the range from 1 to 70 mm²/s and refractive indices (25°C) in the range from 1.46 to 1.51 have been used as optical silicone oils. Unfortunately, the phenyl-type silicone oils in this category typically have broad molecular weight distributions, which leads to the problem of timewise changes in the refractive index due to volatilization of the phenyl-type silicone oil in the low molecular weight region.

Within the realm of the 2-methylphenethyl-functional optical silicone oils, Japanese Laid Open (Kokai or Unexamined) Patent Application Number Hei 6-92973 (92,973/1994) teaches a disiloxane having a 2-methylphenethyl group at one or both terminals. Due to its narrow molecular weight distribution, this disiloxane offers the advantage of undergoing no change in refractive index even when some amount of volatilization occurs. However, the disiloxane itself still suffers from a high volatility.

The inventors discovered that the aforementioned problems can be solved through the use of a phenethyl-substituted or 2-methylphenethyl-substituted cyclooligosiloxane.

In specific terms, an object of the present invention is to provide a low-volatility high-refractive-index optical silicone oil that undergoes very little change in refractive index upon volatilization, when volatilization occurs. An additional object of this invention is to provide a method for preparing the high-refractive-index optical silicone oil according to the present invention.

The present invention is directed to a high-refractive-index optical silicone oil comprising a cyclooligosiloxane having the following formula: 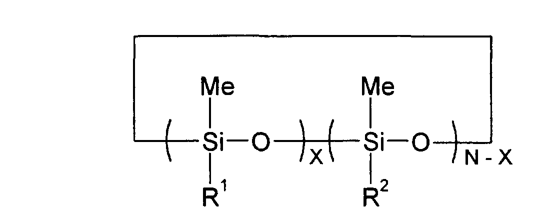 wherein Me is methyl; R¹ is C₁ to C₂₀ alkyl, alkenyl, or aryl; R² is phenethyl or 2-methylphenethyl; **X** is an integer from 0 to 3; and **N** is an integer from 4 to 10; and the silicone oil has a refractive index of from 1.45 to 1.50 at 25 °C.

The present invention is also directed to a method of preparing a high-refractive-index optical silicone oil, comprising reacting a cyclooligosiloxane with a compound selected from the group consisting of styrene and α-methylstyrene in the presence of a hydrosilylation catalyst, wherein:
the cyclooligosiloxane has the formula: 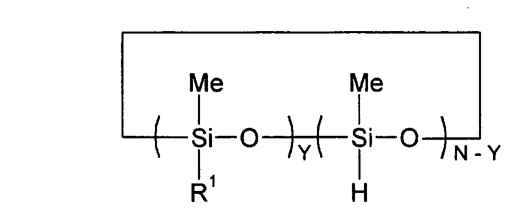 wherein Me is methyl; R¹ is C₁ to C₂₀ alkyl, alkenyl, or aryl; **N** is an integer from 4 to 10; and Y is an integer from 0 to 3; and
the silicone oil has a refractive index of from 1.45 to 1.50 at 25 °C.

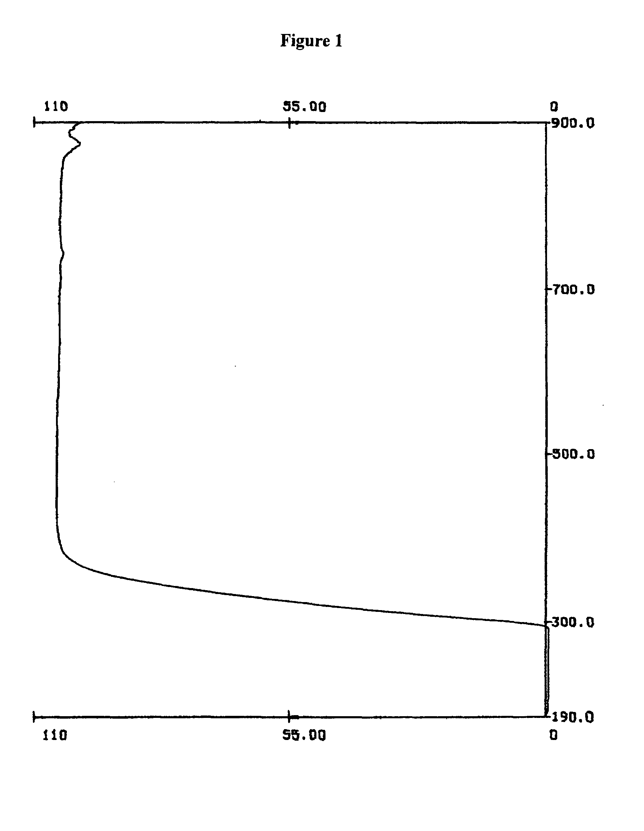

Figure 1 shows a chart of the light transmittance of the silicone oil synthesized in Example 1. This chart was recorded immediately after synthesis and prior to heating in the oven.

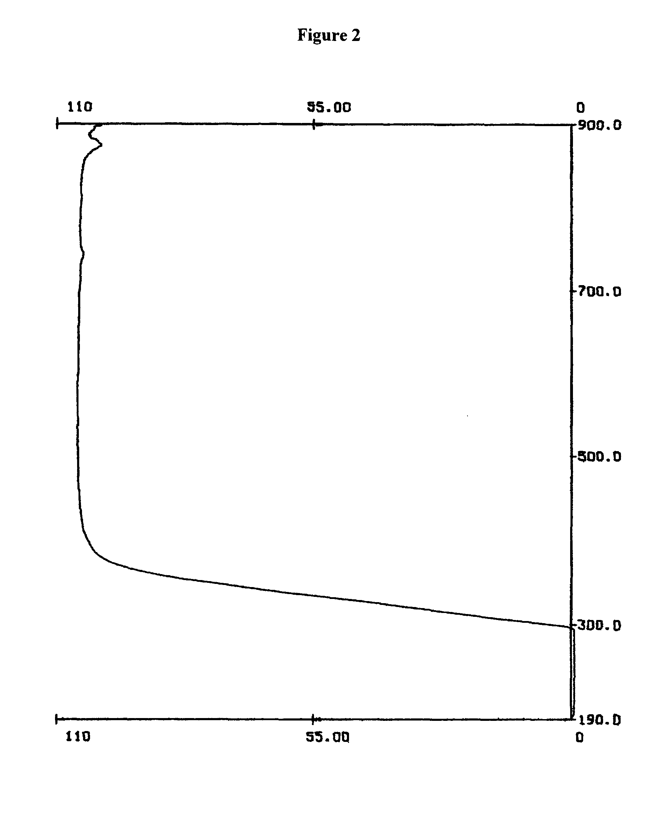

Figure 2 shows a chart of the light transmittance of the silicone oil synthesized in Example 1. This chart was recorded after the silicone oil had been subjected to heating in the oven.

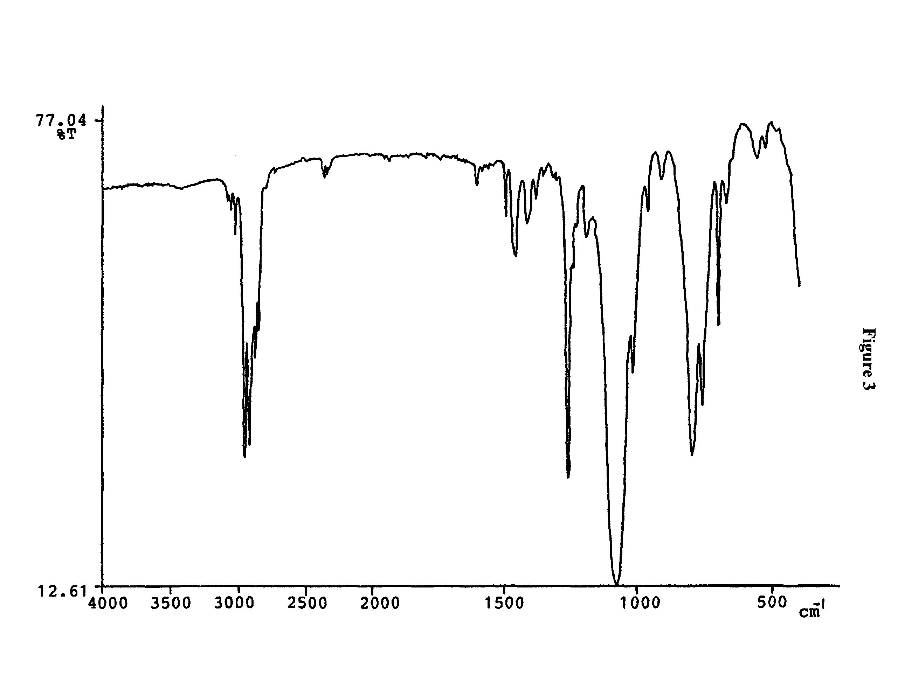

Figure 3 shows the infrared absorption spectrum of the silicone oil synthesized in Example 2.

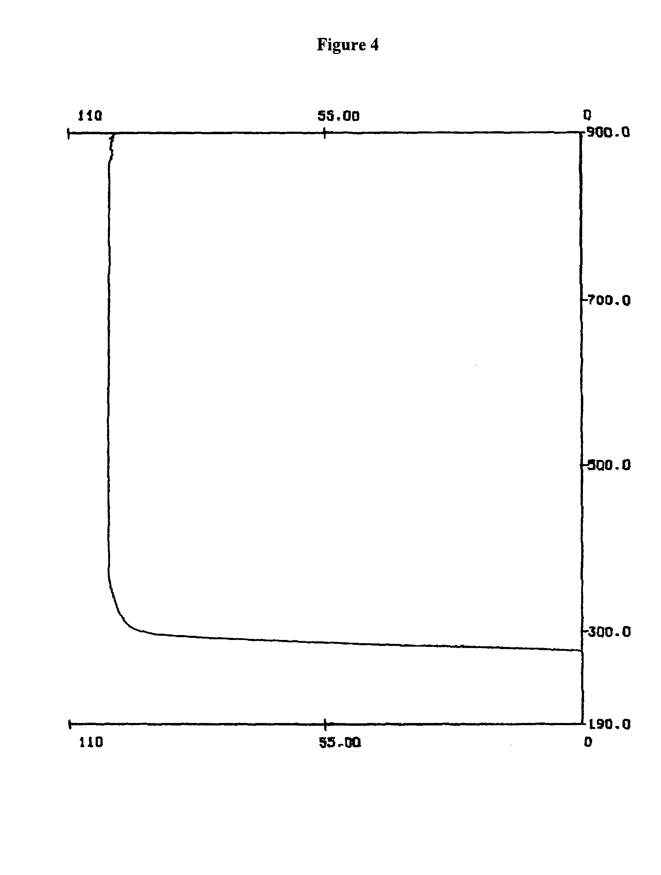

Figure 4 shows a chart of the light transmittance of the silicone oil synthesized in Example 2. This chart was recorded immediately after synthesis and prior to heating in the oven.

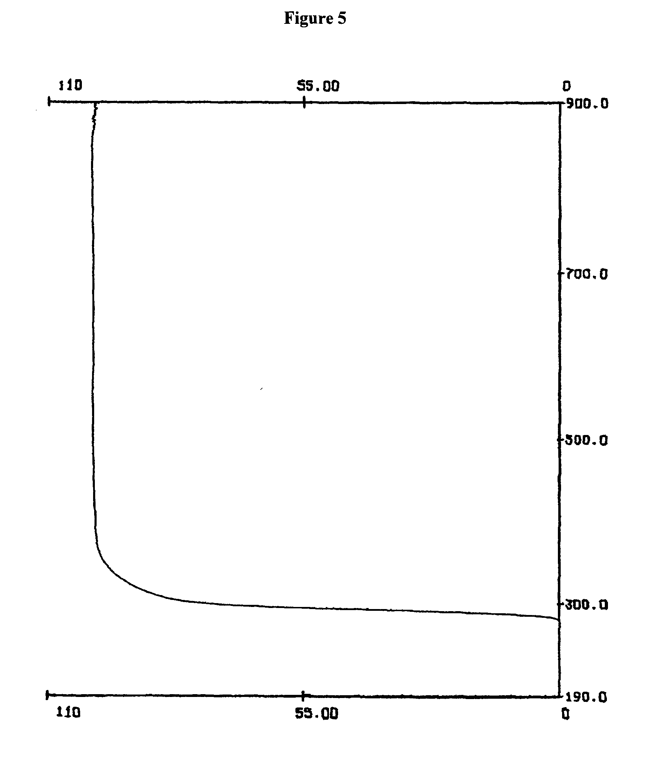

Figure 5 shows a chart of the light transmittance of the silicone oil synthesized in Example 2. This chart was recorded after the silicone oil had been subjected to heating in the oven.

A high-refractive-index optical silicone oil according to the present invention comprises a cyclooligosiloxane having the formula: 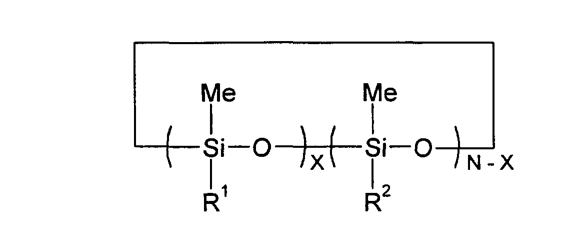 wherein Me is methyl; R¹ is C₁ to C₂₀ alkyl, alkenyl, or aryl; R² is phenethyl or 2-methylphenethyl; **X** is an integer from 0 to 3; and **N** is an integer from 4 to 10; and the silicone oil has a refractive index of from 1.45 to 1.50 at 25 °C.

Examples of R¹ include, but are not limited to, methyl, ethyl, propyl, hexyl, octyl, decyl, vinyl, and phenyl. Preferably, the subscript **N** is an integer from 4 to 8. The cyclooligosiloxane can be a random or block copolymer.

The high-refractive-index optical silicone oil of this invention typically has a viscosity (25°C) in the range from 5 to 100 mm²/s and preferably has a viscosity in the range from 5 to 70 mm²/s. The high-refractive-index optical silicone oil of this invention can be a single cyclooligosiloxane or a mixture of two or more cyclooligosiloxanes. In a preferred embodiment of the present invention, the high-refractive-index optical silicone oil is a mixture comprising two or more cyclooligosiloxanes having different structures.

Examples of the cyclooligosiloxanes of the present invention include, but are not limited to, siloxanes having the following structures, wherein Me is methyl, Et is ethyl, and Ph is phenyl:

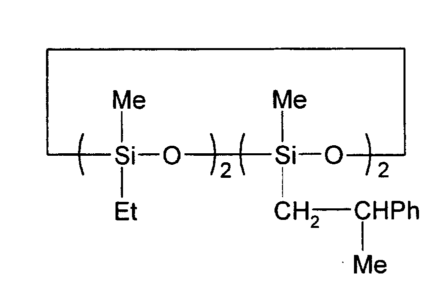

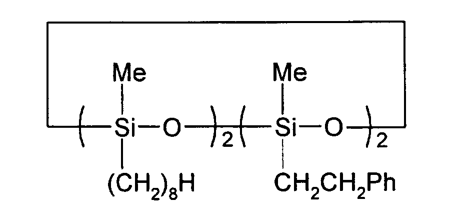

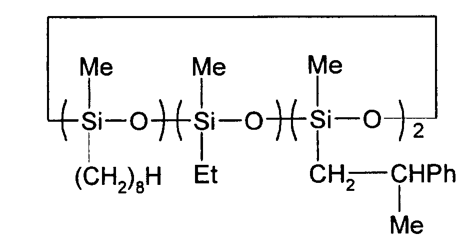

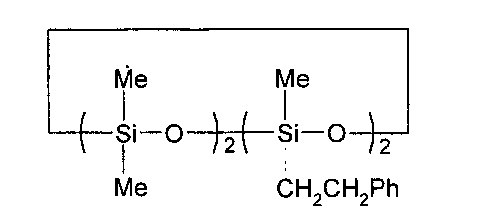

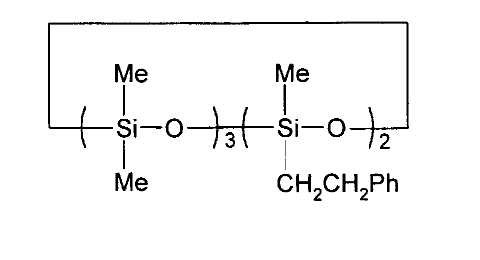

The high-refractive-index optical silicone oil of the present invention can be prepared, for example, by reacting an SiH-functional cyclooligosiloxane having the formula: 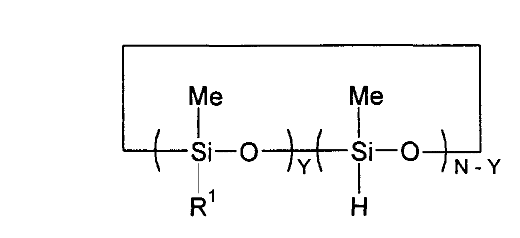 wherein Me is methyl; R¹ is C₁ to C₂₀ alkyl, alkenyl, or aryl; **N** is an integer from 4 to 10; and Y is an integer from 0 to 3, with a compound selected from the group consisting of styrene and α-methylstyrene in the presence of a hydrosilylation catalyst.

The metal hydrosilylation catalyst used in the present method can be, for example, a platinum catalyst, rhodium catalyst, or palladium catalyst, among which platinum catalysts are preferred. The platinum catalysts are exemplified by chloroplatinic acid, alcohol solutions of chloroplatinic acid, platinum/divinyltetramethyldisiloxane complexes, platinum/olefin complexes, and supported platinum catalysts such as platinum-on-carbon powder, platinum-on-silica micropowder, and platinum-on-alumina micropowder. The supported catalysts generally contain from 0.1 to 10 weight% platinum. In a preferred embodiment, the supported platinum catalyst is separated from the high-refractive-index optical silicone oil by a known method, for example, filtration or centrifugal separation, after the hydrosilylation reaction. The metal hydrosilylation catalyst is added in a catalytic quantity, otherwise its concentration is not critical. As a general matter, the catalyst is used in sufficient quantity to provide from 1 to 500 weight parts metal for each 1,000,000 weight parts of the SiH-functional cyclooligosiloxane.

The SiH-functional cyclooligosiloxane, styrene or α-methylstyrene, and metal hydrosilylation catalyst can be mixed in any sequence. For example, the SiH-functional cyclooligosiloxane can first be mixed with the metal hydrosilylation catalyst and the styrene or α-methylstyrene can then be added dropwise to this mixture while the mixture is stirred. The hydrosilylation reaction temperature is also not critical and may be freely selected as appropriate. As a general rule, however, the hydrosilylation reaction is carried out at a temperature from room temperature up to the boiling points of the various components. Unreacted components can be removed after the hydrosilylation reaction by stripping the reaction mixture with heating.

After completion of the hydrosilylation reaction, the hydrosilylation catalyst can be removed from the high-refractive-index optical silicone oil by treating the silicone oil preparation with an adsorbent and thereafter separating the adsorbent from the silicone oil. This process functions to prevent discoloration of the cyclooligosiloxane due to the metal hydrosilylation catalyst. The silicone oil produced by the above method is prone to discoloration, particularly when unsupported catalysts are used, such as chloroplatinic acid, alcohol solutions of chloroplatinic acid, platinum/divinyltetramethyldisiloxane complexes, and platinum/olefin complexes. However, a colorless and transparent high-refractive-index optical silicone oil can be obtained by removing the hydrosilylation catalyst according the present.

The adsorbent can be, for example, active carbon, silane-treated active carbon, silica, silane-treated silica, silica gel, silane-treated silica gel, glass beads, silane-treated glass beads, a hydrolysis and condensation product of an aminosilane, or a hydrolysis and condensation product of a mercaptosilane. The active carbon, silica, silica gel, and glass beads are preferably used after surface treatment with silane. The silanes used for this surface treatment are exemplified by aminosilane coupling agents such as 3-aminopropyltriethoxysilane, 3-aminopropyltrimethoxysilane, 3-aminopropylmethyldiethoxysilane, 3-aminopropylmethyldimethoxysilane, γ-(2-aminoethyl)aminopropyltrimethoxysilane, γ-(2-aminoethyl)aminopropylmethyldimethoxysilane, and γ-anilinopropyltrimethoxysilane; and by mercaptosilane coupling agents such as γ-mercaptopropyltrimethoxysilane and γ-mercaptopropylmethyldimethoxysilane. The hydrolysis and condensation product of aminosilane and the hydrolysis and condensation product of mercaptosilane are exemplified by the hydrolysis and condensation products of the aminosilanes and mercaptosilanes listed above. The specific surface area of the adsorbent is preferably in the range from 10 to 1,000 m²/g.

The adsorbent is used in sufficient quantity to thoroughly remove the metal hydrosilylation catalyst, otherwise the amount of the absorbent is not critical. The adsorbent is preferably used in an amount from 1 to 100 weight parts per 100 weight parts of the cyclooligosiloxane. The high-refractive-index optical silicone oil preparation described above can be treated with the absorbent by mixing the preparation and the absorbent for several minutes to several days―preferably for 10 minutes up to 8 hours―with the absorbent. Mixing can be carried out at room temperature, but heating can also be used provide the temperature does not exceed the boiling point of the cyclooligosiloxane or styrene or α-methylstyrene. This mixing period is followed by separation of the adsorbent by a known method, for example, filtration or centrifugal separation.

While the high-refractive-index optical silicone oil of the present invention comprises the cyclooligosiloxane described hereinabove, it may also contain additives such as an oxidation inhibitor and a refractive index adjuster. Oxidation inhibitors are exemplified by 4,4'-thiobis(6-tert-butyl-m-cresol), 4,4'-butylidenebis(6-tert-butyl-m-cresol), 2,2'-methylenebis(4-methyl-6-tert-butylphenol), 2,2'-methylenebis(4-ethyl-6-tert-butylphenol), 2,5-di-tert-butylhydroquinone, 2,5-di-tert-amylhydroquinone, and 2,6-di-tert-butyl-p-cresol. Refractive index adjusters are exemplified by low-volatile-fraction dimethylpolysiloxanes and methylphenylpolysiloxanes and by organic refractive index adjusters.

The high-refractive-index optical silicone oil of this invention as described hereinabove has a low volatility and in addition undergoes almost no change in refractive index with the passage of time. These characteristic features accrue because this high-refractive-index optical silicone oil comprises at least tetrameric cyclosiloxane and because it does not contain low-molecular-weight compounds such as disiloxanes and trisiloxanes. Moreover, the refractive index (25°C) of this high-refractive-index optical silicone oil can be freely adjusted over the range from 1.45 to 1.50 by employing such tactics as changing the value of **X** in the formula of the cyclooligosiloxane, changing the R¹ and R² in the fomula of the cyclooligosiloxane, and intermixing two or more cyclooligosiloxanes with different structures. The high-refractive-index optical silicone oil of this invention is transparent not only in the visible region (450 nm to 750 nm), but is also transparent in the near infrared region (750 nm to 900 nm) and, as a consequence, is very well suited for optical applications. In addition, use of the preparative method of this invention offers the advantage of preventing discoloration of the cyclooligosiloxane, e.g., yellowing, that can be caused by platinum catalysts. The hereinabove described high-refractive-index optical silicone oil of this invention, because it has a high refractive index and a low viscosity, can be used as fill between the lenses for video projectors and as a fill in the connectors for optical fibers and is particularly well suited for use in the converters, switches, and movable connectors used with optical fibers.

The high-refractive-index optical silicone oil of this invention, because it comprises 2-methylphenethyl-functional or phenethyl-functional cyclooligosiloxane, is characterized by the following properties and features: it has a low volatility; it undergoes very little of the change in refractive index that can be induced by volatilization when volatilization occurs; and its refractive index can be freely adjusted. The preparative method of this invention characteristically affords the high-refractive-index optical silicone oil of this invention in a colorless and transparent form and in high yields.

### EXAMPLES

The invention will be explained in greater detail in the following through working examples. The values reported in the examples for the refractive index, viscosity, and specific gravity were all measured at 25 °C. The light transmittance values reported in the examples were measured using air as the blank. The abbreviation Me in the examples represents methyl, Et represents ethyl, and Ph represents phenyl.

### Example 1

0.7 g Pt-on-carbon powder (platinum content = 0.5 weight%) was added to 59.2 g (0.2 mol) of an SiH-functional cyclotetrasiloxane having the formula: 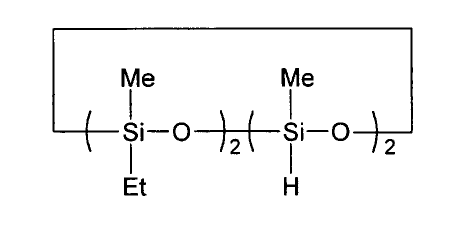 and the mixture was heated to 150 °C. Then 50 g (0.42 mol) α-methylstyrene was added dropwise with stirring. After this addition, the reaction was stirred for an additional 3 hours while heating at 150 °C. Cooling, filtration, and elimination of the volatiles by heating up to 150 °C under reduced pressure then gave 100 g of a reaction product. Analysis of this reaction product by NMR and IR confirmed it to be silicone oil having the formula. 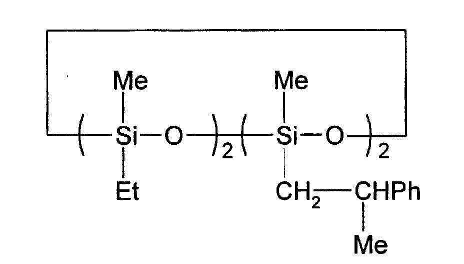 This silicone oil had a refractive index of 1.485, a viscosity of 27 mm²/s, and a specific gravity of 1.08 and in its appearance was colorless and transparent. Measurement of its light transmittance in a 1 mm quartz cell using a light transmittance instrument (UV-265FW from Shimadzu Seisakujo) confirmed a very high light transmittance for this silicone oil over the broad range from 350 to 900 nm. When 1.5 g of this silicone oil was sampled out to an aluminum dish and held for 30 minutes in a 150°C oven, its refractive index remained unchanged and it also underwent almost no change in its light transmittance. These various results confirmed the strong suitability of this silicone oil for optical applications.

### Example 2

0.7 g Pt-on-carbon powder (platinum content = 0.5 weight%) was added to 59.2 g (0.2 mol) of an SiH-functional cyclotetrasiloxane having the formula: 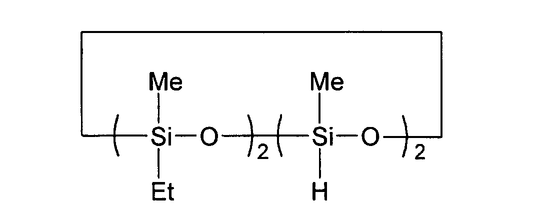 and the mixture was heated to 150 °C. Then, while stirring, 23.8 g (0.2 mol) α-methylstyrene was added dropwise followed by the dropwise addition of 23.5 g (0.21 mol) 1-octene. After these additions, the reaction was stirred for an additional 3 hours while heating at 150 °C. Cooling, filtration, and elimination of the volatiles by heating up to 150 °C under reduced pressure then gave 100 g of a reaction product. Analysis of this reaction product by NMR and IR confirmed it to be silicone oil containing 87 weight% of a cyclotetrasiloxane having the formula: 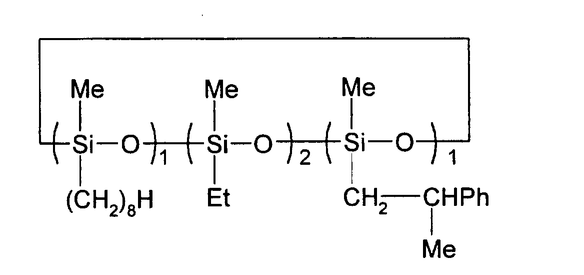 3 weight% of a cyclotetrasiloxane having the formula: 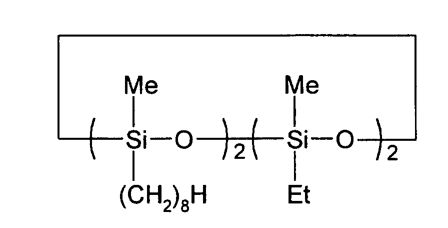 and 10 weight% of a cyclotetrasiloxane having the formula: 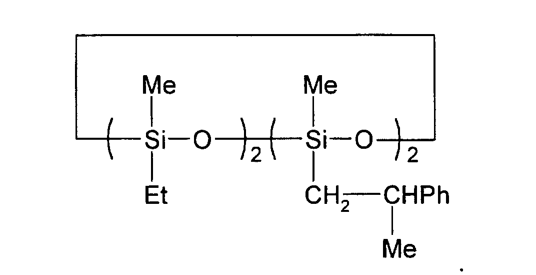 This silicone oil had a refractive index of 1.461, a viscosity of 18 mm²/s, and a specific gravity of 0.96 and in its appearance was colorless and transparent. Measurement of its light transmittance in a 1 mm quartz cell using a light transmittance instrument (UV-265FW from Shimadzu Seisakujo) confirmed a very high light transmittance for this silicone oil over the broad range from 350 to 900 nm. When 1.5 g of this silicone oil was sampled out to an aluminum dish and held for 30 minutes in a 150 °C oven, its weight loss to heating was no greater than 4.4%. Measurement of the refractive index of the remaining silicone oil gave a value of 1.461, showing that no change had occurred. There was also almost no change in its light transmittance. These various results confirmed the strong suitability of this silicone oil for optical applications.

### Example 3

Sufficient chloroplatinic acid/divinyltetramethyldisiloxane complex was added to 59.2 g (0.2 mol) of an SiH-functional cyclotetrasiloxane having the formula: 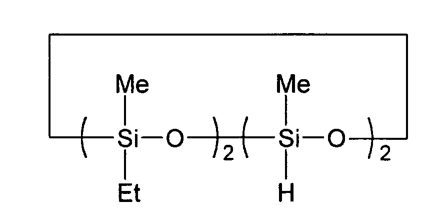 to provide 30 weight-ppm platinum metal calculated on solids and the mixture was heated to 150 °C. 50 g (0.42 mol) α-methylstyrene was then added dropwise with stirring. After this addition, the reaction was stirred for an additional 3 hours while heating at 150 °C. Upon completion of this stirring the volatiles were eliminated under reduced pressure. This was followed by cooling and the addition of 10 g of an adsorbent. This adsorbent was silica gel (specific surface area = 490 m²/g) whose surface had been treated with γ-(2-aminoethyl)aminopropyltrimethoxysilane. The γ-(2-aminoethyl)aminopropyltrimethoxysilane : silica gel weight ratio for this adsorbent was 1:5. Adsorbent addition was followed by mixing for 1 hour at 60 °C. After then cooling, the adsorbent was separated off by filtration to give 100 g reaction product. Analysis of this reaction product by NMR and IR confirmed it to be silicone oil having the formula: 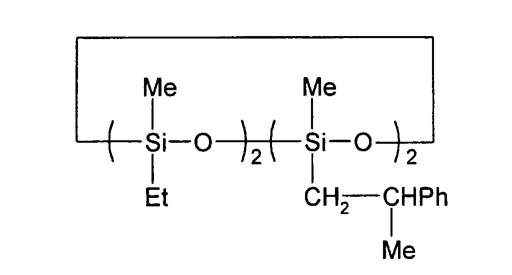 This silicone oil had a refractive index of 1.485, a viscosity of 27 mm²/s, and a specific gravity of 1.08 and in its appearance was colorless and transparent. When 1.5 g of this silicone oil was sampled out to an aluminum dish and held for 30 minutes in a 150 °C oven, its refractive index remained unchanged. These various results confirmed the strong suitability of this silicone oil for optical applications.

### Comparative Example 1

A silicone oil having the formula: 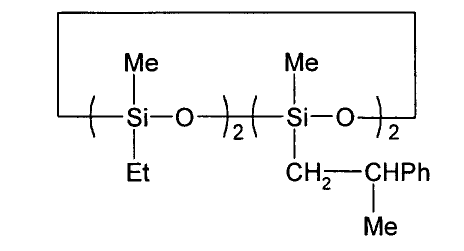 was synthesized by the procedure described in Example 3, but in this case without using the silica gel adsorbent (silica gel with specific surface area = 490 m²/g whose surface had been treated with γ-(2-aminoethyl)aminopropyltrimethoxysilane) that was used in Example 3. The silicone oil product in this case exhibited a yellow discoloration and was unsuitable for optical applications.

### Comparative Example 2

0.7 g Pt-on-carbon powder (Pt content = 1 weight%) was added to a previously prepared mixture of 28.1 g (0.19 mol) of the SiH-functional pentamethyldisiloxane HMe₂SiOSiMe₃ and 24.8 g (0.21 mol) α-methylstyrene and the resulting mixture was heated to 150 °C while stirring. The reaction was subsequently stirred and heated for an additional 3 hours at 150 °C. This was followed by cooling, filtration, and removal of the volatiles by heating up to 150 °C while under reduced pressure. The result was 45 g of a transparent reaction product. Analysis of this reaction product by NMR and IR confirmed it to be a silicone oil having the following structure: 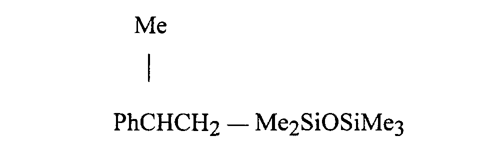 This silicone oil had a refractive index of 1.46 and a viscosity of 2 mm²/s. 1.5 g of this silicone oil was sampled out to an aluminum dish and held for 30 minutes in a 150 ° oven. The resulting weight loss to heating was 100 weight% and this silicone oil thus underwent complete volatilization.

### Comparative Example 3

0.7 g Pt-on-carbon powder (Pt content = 1 weight%) was added to a previously prepared mixture of 32.2 g (0.02 mol) of the SiH-functional polydimethylsiloxane HMe₂SiO(Me₂SiO)₂₀SiMe₂H and 11.8 g (0.1 mol) α-methylstyrene and the resulting mixture was heated to 150°C while stirring. The reaction was subsequently stirred and heated for an additional 3 hours at 150 °. This was followed by cooling, filtration, and removal of the volatiles by heating up to 150 ° while under reduced pressure. The result was 35 g of a transparent reaction product. Analysis of this reaction product by NMR and IR confirmed it to be a silicone oil having the structure: 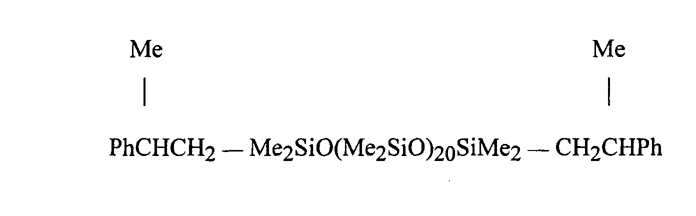 This silicone oil had a refractive index of 1.42.

## Claims

1. A high-refractive-index optical silicone oil comprising a cyclooligosiloxane having the following formula: 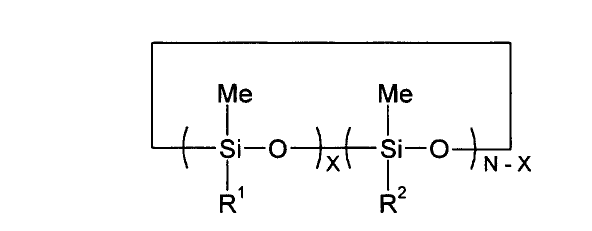 wherein Me is methyl; R¹ is C₁ to C₂₀ alkyl, alkenyl, or aryl; R² is phenethyl or 2-methylphenethyl; **X** is an integer from 0 to 3; and **N** is an integer from 4 to 10; and the silicone oil has a refractive index of from 1.45 to 1.50 at 25 °C.

2. The optical silicone oil according to claim 1, wherein N is from 4 to 8.

3. The optical silicone oil according to claim 1 or claim 2, wherein the cyclooligosiloxane is a random or block copolymer.

4. The optical silicone oil according to any of claims 1 to 3, wherein the oil has a viscosity of from 5 to 100 mm²/s at 25°C.

5. The optical silicone oil according to any of claims 1 to 4, wherein the oil is a mixture comprising at least two cyclooligosiloxanes having different structures.

6. A method of preparing a high-refractive-index optical silicone oil, comprising reacting a cyclooligosiloxane with a compound selected from the group consisting of styrene and α-methylstyrene in the presence of a hydrosilylation catalyst, wherein:
the cyclooligosiloxane has the formula: 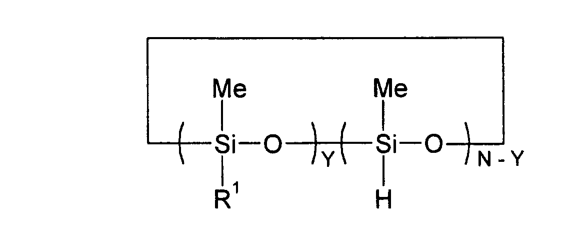 wherein Me is methyl; R¹ is C₁ to C₂₀ alkyl, alkenyl, or aryl; **N** is an integer from 4 to 10; and Y is an integer from 0 to 3; and
the silicone oil has a refractive index of from 1.45 to 1.50 at 25 °C.

7. The method according to claim 6, wherein the hydrosilylation catalyst is a platinum catalyst.

8. The method according to claim 7, wherein the platinum catalyst is a supported platinum catalyst.

9. The method according to claim 8, further comprising separating the supported platinum catalyst from the high-refractive-index optical silicone oil.

10. The method according to claim 6, further comprising treating the high-refractive-index optical silicone oil with an absorbent and separating the absorbent from the silicone oil.

11. The method according to claim 10, wherein the absorbent is selected from the group consisting of active carbon, silane-treated active carbon, silica, silane-treated silica, silica gel, silane-treated silica gel, glass beads, silane-treated glass beads, a hydrolysis and condensation product of an aminosilane, and a hydrolysis and condensation product of a mercaptosilane.

12. The method according to claim 11, wherein the absorbent has a surface area of from 10 to 1,000 m²/g.

13. The method according to claim 11, wherein the absorbent is used in an amount from 1 to 100 parts by weight per 100 parts by weight of the cyclooligosiloxane.
